# EUROPÄISCHE PATENTSCHRIFT

(11) **EP 3 742 132 B1**
(45) Veröffentlichungstag und Bekanntmachung des Hinweises auf die Patenterteilung: **21.06.2023**
(21) Anmeldenummer: 19176563.5
(22) Anmeldetag: 24.05.2019
(51) Int. Cl.: G01F 23/288, G01F 1/78, G01N 9/24

(54) **RADIOMETRISCHES FÜLLSTANDMESSGERÄT MIT REFERENZSZINTILLATOR**
RADIOMETRIC FILL LEVEL MEASURING DEVICE WITH REFERENCE SCINTILLATOR
APPAREIL RADIOMÉTRIQUE DE MESURE DU NIVEAU DE REMPLISSAGE POURVU D'UN SCINTILLATEUR DE RÉFÉRENCE

(43) Veröffentlichungstag der Anmeldung: 25.11.2020
(73) Patentinhaber: VEGA Grieshaber KG, 77709 Wolfach (DE)
(72) Erfinder: RAUER, Winfried, 77716 Fischerbach (DE); HARTER, Matthias, 77773 Schenkenzell (DE)
(74) Vertreter: Maiwald GmbH

(56) Entgegenhaltungen:
- EP-A2- 2 354 809
- DE-A1- 10 132 267

## Beschreibung

### Gebiet der Erfindung

Die Erfindung betrifft eine radiometrische Füllstandmessvorrichtung zur Füllstandmessung, zur Dichtemessung und/oder zur Massenstrommessung. Insbesondere betrifft die Erfindung ein Verfahren zur Kompensation einer Messabweichung eines Szintillators und/oder eines Photodetektors, der in der radiometrischen Füllstandmessvorrichtung verwendet wird. Weiter betrifft die Erfindung eine Verwendung, ein Programmelement und ein computerlesbares Medium.

### Hintergrund

Eine radiometrische Füllstandmessvorrichtung kann beispielsweise verwendet werden, um einen bestimmten Pegel eines Füllguts, z.B. in einem Behälter, anzuzeigen, d.h. um anzuzeigen, ob etwa eine vordefinierte obere, untere oder sonstige Grenze des Füllstands in dem Behälter erreicht wurde. Der Behälter kann ein Gefäß oder Messtank von beliebiger Form sein. Der Behälter kann auch ein Gerinne, beispielsweise ein Bach- oder Flussbett, sein.

Die radiometrische Füllstandmessvorrichtung kann z.B. einen Gammastrahler zum Senden eines radiometrischen Signals und/oder von Gammastrahlung verwenden; dies kann von einem Detektor zu Messzwecken empfangen werden. Der Detektor kann einen Szintillator beinhalten, der ein Lichtsignal sendet, wenn dieser z.B. von einem Gammastrahl getroffen wird. Bei zumindest einigen Szintillatoren kann die Amplitude und/oder die Frequenz des Lichtsignals von z.B. der Temperatur des Szintillators abhängig sein und dadurch zu Messabweichungen gegenüber einer Referenzmessung führen. Derartige Messabweichungen können die Messgenauigkeit beeinflussen.

Die Druckschrift EP 2 354 809 A2 beschreibt eine Methode zur Stabilisierung der Verstärkung und zur Temperaturkompensation.

### Zusammenfassung der Erfindung

Es ist eine Aufgabe der Erfindung, eine radiometrische Füllstandmessvorrichtung zur Verfügung zu stellen.

Diese Aufgabe wird durch den Gegenstand der unabhängigen Patentansprüche gelöst.

Weiterbildungen der Erfindung ergeben sich aus den Unteransprüchen und der folgenden Beschreibung.

Ein erster Aspekt der Erfindung betrifft ein Verfahren zur Kompensation einer Messabweichung eines ersten Szintillators und/oder eines Photodetektors einer radiometrischen Füllstandmessvorrichtung zur Füllstandmessung, mit den Schritten:
- Detektieren, mittels des ersten Szintillators (31), von radioaktiver Strahlung von einem Gammastrahler (20),
- Detektieren, mittels eines zweiten Szintillators, von radioaktiver Strahlung des zweiten Szintillators,
wobei der zweite Szintillator von dem ersten Szintillator, von dem Gammastrahler und/oder einer weiteren äußeren Strahlenquelle abgeschirmt ist, so dass der zweite Szintillator nur radioaktive Strahlung von dem zweiten Szintillator selbst empfängt;
- Senden, in Reaktion auf radioaktive Strahlung, eines ersten Lichtsignals von dem ersten Szintillator und eines zweiten Lichtsignals von dem zweiten Szintillator, wobei sich das erste Lichtsignal von dem zweiten Lichtsignal unterscheidet;
- Empfangen, mittels des Photodetektors, des ersten Lichtsignals von dem ersten Szintillator und des zweiten Lichtsignals von dem zweiten Szintillator, und umwandeln der Lichtsignale in elektrische Signale;
- Vergleichen, mittels eines Komparators, der elektrischen Signale mit hinterlegten Referenzsignalen; und
- Anpassen einer Verstärkung des Photodetektors in Reaktion auf das Vergleichen der elektrischen Signale und hinterlegter Referenzsignale.

Eine radiometrische Füllstandmessvorrichtung wird beispielsweise zur Füllstandmessung und/oder weiteren Messungen eines Füllguts verwendet, z.B. zur Messung eines Pegels, einer Dichte und/oder eines Flusses des Füllguts. Die radiometrische Füllstandmessvorrichtung weist den ersten Szintillator und den Photodetektor auf. Der Szintillator sendet ein Lichtsignal, wenn dieser z.B. von radioaktiver Strahlung getroffen wird. Der erste Szintillator ist der primäre Szintillator, dessen Messergebnisse von der radiometrischen Füllstandmessvorrichtung verwendet werden. Der Photodetektor kann z.B. ein Photomultiplier, Photoelektronenvervielfacher (photomultiplier tube, PMT), eine sog. Mikrokanalplatte (micro channel plate photomultiplier, MCP-PMT, MCP), ein Silizium-Photomultiplier (z.B. eine sog. Avalanche Photodiode), ein Photodioden-Array und/oder ein anderer Detektor sein. Der erste Szintillator und/oder der Photodetektor kann eine Messabweichung aufweisen, die z.B. durch Temperaturunterschiede und/oder durch Alterung von zumindest einer dieser Komponenten verursacht wird.

In einigen Ausführungsformen weist das Verfahren einen weiteren Schritt des Ermittelns der aktuellen Temperatur und des zur Temperatur passend hinterlegten Referenzsignals auf. Diese Beziehung wird gelegentlich als "Temperaturgang" bezeichnet. Die aktuelle Temperatur kann z.B. direkt an den Messvorrichtungen gemessen werden, sie kann indirekt, z.B. mittels eines Fernthermometers, und/oder indirekt durch Schließen von der Außentemperatur der Messvorrichtungen auf die aktuelle Temperatur der Messvorrichtungen. Damit kann die Genauigkeit der Messungen und/oder der Kompensation weiter verbessert werden.

In einigen Ausführungsformen ist die Messabweichung eine Funktion der Temperatur, und die zur Temperatur passend hinterlegten Referenzsignale sind in einer Vergleichstabelle hinterlegt. Das Referenzsignal kann z.B. als ein Array von Referenzsignalen, welches einer bestimmten Temperatur ein Referenzsignal zuordnet, gespeichert und/oder verfügbar sein. Dies kann zu einem schnellen und/oder strukturierten Zugriff auf die Messwerte der Referenzsignale beitragen.

In einigen Ausführungsformen ist der erste Szintillator zu dem zweiten Szintillator benachbart. Die Nachbarschaft kann z.B. durch eine mechanische und/oder thermische Kopplung realisiert werden. Durch die Nachbarschaft kann beispielsweise das Empfangen der Lichtsignale mittels des Photodetektors verbessert werden. Weiterhin kann dadurch z.B. eine sehr ähnliche Temperatur der beiden Szintillatoren erreicht werden.

In einer Ausführungsform wird die Messabweichung des ersten Szintillators und/oder des Photodetektors durch eine Alterung des ersten Szintillators und/oder des Photodetektors verursacht. Das Verfahren kann dadurch auch diese - und/oder weitere - Effekte berücksichtigen, die eine Messabweichung verursachen können.

In einigen Ausführungsformen wird eine Unterscheidung des ersten Lichtsignals von dem ersten Szintillator und des zweiten Lichtsignals von dem zweiten Szintillator auf Basis einer unterschiedlichen Laufzeit, einer unterschiedlichen Farbe und/oder einer unterschiedlichen Intensität der Lichtsignale durchgeführt. Die Unterscheidung kann mittels einer Unterscheidungsvorrichtung durchgeführt werden. Durch die Wahl der Unterscheidungsmerkmale kann beispielsweise der Diskriminator vereinfacht und/oder eine verbesserte Präzision bieten.

In einigen Ausführungsformen ist der zweite Szintillator einer der folgenden Szintillatoren: Lutetium Aluminium Garnet, LuAG, Cerium-dotiertes Lutetium Yttrium Silikat, LYSO, Lutetiumoxyorthosilikat, LSO, Yttrium Aluminium Perovskite (Cerium), YAP, Yttrium-Aluminium-Granat, YAG, und/oder ein ähnlicher Szintillator. Diese Typen von Szintillatoren detektieren nicht nur Lichtsignale, sondern sind, aufgrund ihrer eigenen Radioaktivität, zugleich Sender von radioaktiver Strahlung. Zudem weisen zumindest einige dieser Szintillatoren eine geringe oder sehr geringe Alterung auf.

In einigen Ausführungsformen weist das Verfahren einen weiteren Schritt auf:
- Senden eines Alarms, wenn weder das erste Lichtsignal von dem ersten Szintillator noch das zweite Lichtsignal von dem zweiten Szintillator gesendet und/oder empfangen wird.

Ein weiterer Aspekt betrifft eine radiometrische Füllstandmessvorrichtung zur Füllstandmessung, zur Dichtemessung und/oder zur Massenstrommessung. Die Füllstandmessvorrichtung weist dabei auf:
einen ersten Szintillator, welcher dazu eingerichtet ist, radioaktive Strahlung von einem Gammastrahler zu detektieren und, in Reaktion auf die radioaktive Strahlung, ein erstes Lichtsignal zu senden;
einen zweiten Szintillator, welcher dazu eingerichtet ist, radioaktive Strahlung von dem zweiten Szintillator zu detektieren und, in Reaktion auf die eigene radioaktive Strahlung, ein zweites Lichtsignal zu senden, wobei sich das zweite Lichtsignal von dem ersten Lichtsignal unterscheidet,
wobei der zweite Szintillator von dem ersten Szintillator, von einem Gammastrahler und/oder einer weiteren äußeren Strahlenquelle abgeschirmt ist, so dass der zweite Szintillator nur radioaktive Strahlung von dem zweiten Szintillator selbst empfängt;
einen Photodetektor, welcher dazu eingerichtet ist, das erste Lichtsignal und das zweite Lichtsignal zu empfangen und in elektrische Signale umzuwandeln; und
einen Komparator, welcher dazu eingerichtet ist, die elektrischen Signale mit hinterlegten elektrischen Referenzsignalen zu vergleichen,
wobei die Verstärkung des Photodetektors in Reaktion auf das Vergleichen angepasst wird.

In einer Ausführungsform weist die radiometrische Füllstandmessvorrichtung weiterhin eine Unterscheidungsvorrichtung auf, welche dazu eingerichtet ist, das erste Lichtsignal und das zweite Lichtsignal auf Basis einer unterschiedlichen Signallaufzeit, einer unterschiedlichen Farbe und/oder Intensität des ersten Lichtsignals und des zweiten Lichtsignals zu unterscheiden. Diese unterschiedlichen Signallaufzeiten können beispielsweise dadurch unterschieden werden, dass ein Photodetektor an einem ersten Ende (z.B. "unten") des ersten Szintillators und ein weiterer Photodetektor an einem zweiten Ende (z.B. "oben") des ersten Szintillators und an dem zweiten Szintillator angeordnet ist. Dadurch können die Signale des zweiten Szintillators durch die unterschiedlichen Signallaufzeiten bezogen auf die beiden Photodetektoren getrennt werden.

In einer Ausführungsform ist der zweite Szintillator einer der folgenden Szintillatoren: Lutetium Aluminium Garnet, LuAG, Cerium-dotiertes Lutetium Yttrium Silikat, LYSO, Lutetiumoxyorthosilikat, LSO, Yttrium Aluminium Perovskite (Cerium), YAP, Yttrium-Aluminium-Granat, YAG, und/oder ein ähnlicher Szintillator.

Ein weiterer Aspekt der Erfindung betrifft eine Verwendung einer Füllstandmessvorrichtung wie oben und/oder nachfolgend beschrieben zur radiometrischen Füllstandmessung, zur Grenzstandmessung, zur Durchflussmessung, zur Massenstrommessung und/oder zur Dichtemessung.

Ein weiterer Aspekt der Erfindung betrifft ein Programmelement, welches, wenn es auf einem Prozessor oder einer Prozessoreinheit einer Messvorrichtung ausgeführt wird, die Messvorrichtung anweist, das oben und/oder nachfolgend beschriebene Verfahren durchzuführen.

Ein weiterer Aspekt der Erfindung betrifft ein computerlesbares Medium, auf dem das genannte Programmelement gespeichert ist.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen. Die Darstellungen in den folgenden Figuren sind schematisch und nicht maßstäblich.

### Kurze Beschreibung der Figuren

Es zeigen:
- **Fig. 1**: eine schematische Skizze einer radiometrischen Füllstandmessvorrichtung gemäß einer Ausführungsform;
- **Fig. 2a** bis **2e**: schematische Skizzen eines Teilsystems gemäß einer Ausführungsform;
- **Fig. 3**: ein Verfahren gemäß einer Ausführungsform.

### Detaillierte Beschreibung von Ausführungsformen

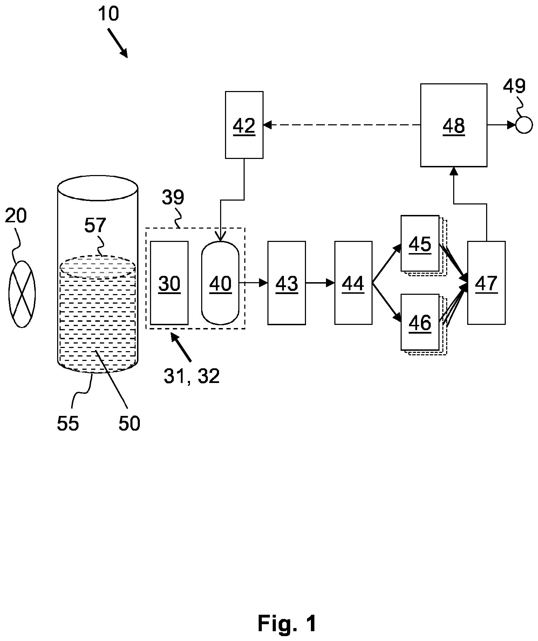

**Fig. 1** zeigt eine schematische Skizze einer radiometrischen Füllstandmessvorrichtung 10. Die funktionalen Komponenten der Füllstandmessvorrichtung 10 sind als logische Blöcke dargestellt. Zumindest einige diese logischen Blöcke können als Hardware, als Software oder auch teilweise als Hardware und teilweise als Software implementiert sein. Die logischen Blöcke können physisch getrennt sein oder auf derselben Komponente lokalisiert sein. Beispielsweise kann der Komparator 47 als eigenständige Hardware, als Teil eines Chips und/oder als Software, welche auf der Prozessoreinheit 48 abläuft, implementiert sein.

Die radiometrische Füllstandmessvorrichtung 10 weist eine Szintillatoranordnung 30, die dazu eingerichtet ist, radioaktive Strahlung von einem Gammastrahler 20 zu detektieren.

Zwischen dem Gammastrahler 20 und der Szintillatoranordnung 30 ist ein Behälter 55 angeordnet, welche ein Füllgut 50 mit einem Füllstand 57 enthält. Die Szintillatoranordnung 30 weist einen ersten Szintillator 31 und einen zweiten Szintillator 32 auf. Die

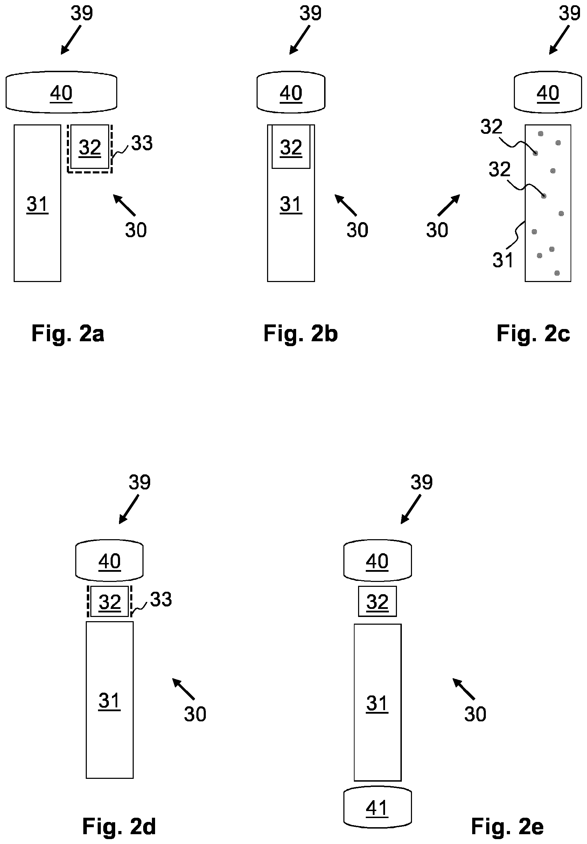

Szintillatoren 31 und 32 senden, in Reaktion auf radioaktive Strahlung, Lichtsignale aus. Die Szintillatoranordnung 30 sind in dieser Zeichnung zusammen mit einem Photodetektor 40 zu einem Teilsystem 39 (gestrichelt) zusammengefasst, das im Folgenden (in Fig. 2a bis 2e) in verschiedenen Ausführungsformen dargestellt ist.

Die Lichtsignale von dem ersten und dem zweiten Szintillator werden von dem Photodetektor 40 empfangen und in elektrische Signale umgewandelt. Der Photodetektor 40 kann z.B. ein Photomultiplier oder Photoelektronenvervielfacher (photomultiplier tube, PMT) sein. Ein derartiger Photomultiplier weist eine Hochspannungsversorgung 42 auf, die z.B. von einer Rechen- und Steuereinheit oder Prozessoreinheit 48 angesteuert werden kann. Nach dem Photodetektor 40 ist ein Verstärker 43 angeordnet, welcher die elektrischen Signale von dem Photodetektor 40 verstärkt. Im Anschluss ist ein Diskriminator oder Unterscheidungsvorrichtung 44 angeordnet, welche die elektrischen Signale von dem Verstärker 43 in Signale 45, 46 aufteilt, die durch radioaktive Strahlung verursacht wurden und von dem ersten Szintillator 31 bzw. von dem zweiten Szintillator 32 detektiert wurden. Die Aufteilung kann z.B. auf Basis einer unterschiedlichen Signallaufzeit, einer unterschiedlichen Farbe und/oder Intensität des ersten bzw. des zweiten Lichtsignals erfolgen. Ein nachgeschalteter Komparator 47 ist dazu eingerichtet, die elektrischen Signale - beispielsweise die elektrischen Signale, die von dem zweiten Lichtsignal herrühren - mit hinterlegten elektrischen Referenzsignalen zu vergleichen. Der Komparator 47 kann als Hardware und/oder als Software implementiert sein. Die Hardwarekomponente kann beispielsweise als Spezial-Hardware und/oder z.B. als Teil eines Chips implementiert sein, der auch einen Prozessor beinhaltet oder auch in dem Prozessor 48 lokalisiert sein kann. Die elektrischen Referenzsignale können z.B. Temperaturgänge einhalten. Die Temperaturgänge können z.B. bei der Herstellung der Füllstandmessvorrichtung 10 gemessen werden. Die Temperaturgänge können zusätzlich oder alternativ auch während des Betriebs der Füllstandmessvorrichtung 10 gemessen werden. In der Prozessoreinheit oder Rechen- und Steuereinheit 48 können die Messdaten weiterverarbeitet werden; es kann z.B. eine Formatanpassung und/oder weitere Berechnungen durchgeführt werden. An einem Ausgang 49 stehen die Messdaten zur Verfügung. Dies kann z.B. in Form eines 4-20mA Schleifenstroms, und/oder als ein Feldbus - z.B. mit einem Protokoll gemäß HART, Profibus, Foundation Fieldbus, und/oder als ein proprietäres Protokoll - implementiert sein; Die Messdaten können in einem Format zur Verfügung stehen, das für eine Kommunikation via WLAN (Wireless LAN) und/oder für ein Protokoll wie LTE, 5G, etc. geeignet ist.

In **Fig. 2a** bis **2e** sind schematische Skizzen des Teilsystems 39 gemäß einer Ausführungsform gezeigt. Das Teilsystem 39 weist die Szintillatoranordnung 30 und den Photodetektor 40 auf. Insbesondere sind verschiedene relative Anordnungen von Szintillatoranordnung 30 und Photodetektor 40 zueinander dargestellt. Es wird z.B. deutlich, dass bei sämtlichen gezeigten Ausführungsformen der erste Szintillator 31 und der zweite Szintillator 32 benachbart angeordnet sind.

Dabei zeigt **Fig. 2a** ein Ausführungsbeispiel, bei dem der erste Szintillator 31 und der zweite Szintillator 32 nebeneinander vor dem Photodetektor 40 angeordnet sind. **Fig. 2b** zeigt ein Ausführungsbeispiel, bei dem der zweite Szintillator 32 in den ersten Szintillator 31 aufgenommen ist oder innerhalb einer Kontur des ersten Szintillators 31 angeordnet ist. Bei **Fig. 2c** ist der zweite Szintillator 32 in einer "aufgelösten" Form in den ersten Szintillator 31 aufgenommen und/oder innerhalb einer Kontur des ersten Szintillators 31 verteilt. **Fig. 2d** zeigt ein Ausführungsbeispiel, bei dem der zweite Szintillator 32 zwischen dem ersten Szintillator 31 und dem Photodetektor 40 angeordnet ist. Dabei durchlaufen Lichtimpulse von dem ersten Szintillator 31 zumindest teilweise den zweiten Szintillator 32, bevor diese von dem Photodetektor 40 detektiert werden. Bei **Fig. 2e** ist der zweite Szintillator 32, ähnlich wie bei **Fig. 2d**, zwischen dem ersten Szintillator 31 und dem Photodetektor 40 angeordnet. Ferner ist ein weiterer Photodetektor 41 gezeigt, der vorzugsweise oder ausschließlich Signale von dem ersten Szintillator 31 empfängt. Diese Ausführungsform kann auch verwendet werden, um die unterschiedlichen Lichtsignals auf Basis ihrer unterschiedlichen Signallaufzeiten zu detektieren.

Die gezeigten Ausführungsformen und/oder andere Ausführungsformen können eine optionale Trennwand 33 aufweisen, durch welche der zweite Szintillator 32 von dem Gammastrahler 20 und/oder einer weiteren äußeren Strahlenquelle abgeschirmt wird.

Beispielsweise kann - wie in **Fig. 2a** gezeigt - die Trennwand 33 U-förmig um den zweiten Szintillator 32 angeordnet sein, so dass dessen Lichtstrahlung von dem Photodetektor 40 detektiert wird, der zweite Szintillator 32 aber seinerseits keine radioaktive Strahlung empfängt und/oder detektiert. In dem Ausführungsbeispiel von **Fig. 2d** kann die Trennwand 33 seitlich um den zweiten Szintillator 32 angeordnet sein, so dass dessen Lichtstrahlung von dem Photodetektor 40 detektiert wird, der zweite Szintillator 32 aber seinerseits keine radioaktive Strahlung empfängt und/oder detektiert.

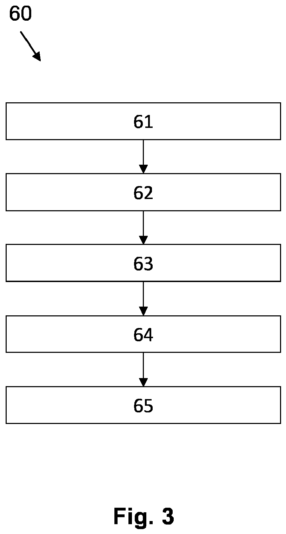

**Fig. 3** zeigt ein Flussdiagramm 60 eines Verfahrens gemäß einer Ausführungsform. In einem Schritt 61 wird, mittels eines zweiten Szintillators 32 (siehe **Fig. 2a** bis **2e**), radioaktive Strahlung des zweiten Szintillators 32 detektiert. In einem Schritt 62 wird, in Reaktion auf radioaktive Strahlung, ein erstes Lichtsignal von einem ersten Szintillator 31 und ein zweites Lichtsignal von dem zweiten Szintillator 32 gesendet. Dabei unterscheidet sich das erste Lichtsignal von dem zweiten Lichtsignal, z.B. in Bezug auf Amplitude, Laufzeit und/oder Farbe. In einem Schritt 63 wird, mittels des Photodetektors 40, das erste Lichtsignal von dem ersten Szintillator 31 und das zweite Lichtsignal von dem zweiten Szintillator 32 empfangen, und die Lichtsignale werden in elektrische Signale umgewandelt. In einem Schritt 64 wird, z.B. mittels eines Komparators 47 (siehe **Fig. 1**), das erste Lichtsignal und das zweite Lichtsignal verglichen. In einem Schritt 65 wird eine Verstärkung des Photodetektors 40 und/oder anderer Komponenten der radiometrischen Füllstandmessvorrichtung 10 in Reaktion auf das Vergleichen der elektrischen Signale und hinterlegter Referenzsignale angepasst.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### Liste der Bezugszeichen

- 10: radiometrische Füllstandmessvorrichtung
- 20: Gammastrahler
- 30: Szintillatoranordnung
- 31: erster Szintillator
- 32: zweiter Szintillator
- 33: optionale Trennwand
- 40: Photodetektor
- 41: weiterer Photodetektor
- 42: Hochspannungsversorgung
- 43: Verstärker
- 44: Unterscheidungsvorrichtung
- 45, 46: Signale
- 47: Komparator
- 48: Prozessoreinheit
- 49: Ausgang
- 50: Füllgut
- 55: Behälter
- 57: Füllstand
- 60: Flussdiagramm
- 61 - 65: Schritte

## Patentansprüche

1. Verfahren zur Kompensation einer Messabweichung eines ersten Szintillators (31) und/oder eines Photodetektors (40) einer radiometrischen Füllstandmessvorrichtung (10) zur Füllstandmessung, mit den Schritten:
- Detektieren, mittels des ersten Szintillators (31), von radioaktiver Strahlung von einem Gammastrahler (20),
- Detektieren, mittels eines zweiten Szintillators (32), von radioaktiver Strahlung des zweiten Szintillators (32),
wobei der zweite Szintillator (32) von dem ersten Szintillator (31), von dem Gammastrahler (20) und/oder einer weiteren äußeren Strahlenquelle abgeschirmt ist, so dass der zweite Szintillator nur radioaktive Strahlung von dem zweiten Szintillator selbst empfängt;
- Senden, in Reaktion auf radioaktive Strahlung, eines ersten Lichtsignals von dem ersten Szintillator (31) und eines zweiten Lichtsignals von dem zweiten Szintillator (32), wobei sich das erste Lichtsignal von dem zweiten Lichtsignal unterscheidet;
- Empfangen, mittels des Photodetektors (40), des ersten Lichtsignals von dem ersten Szintillator (31) und des zweiten Lichtsignals von dem zweiten Szintillator (32), und umwandeln der Lichtsignale in elektrische Signale;
- Vergleichen, mittels eines Komparators (47), der elektrischen Signale mit hinterlegten Referenzsignalen; und
- Anpassen einer Verstärkung des Photodetektors (40) in Reaktion auf das Vergleichen der elektrischen Signale und hinterlegter Referenzsignale.

2. Verfahren nach Anspruch 1, mit dem weiteren Schritt:
- Ermitteln einer aktuellen Temperatur und des zur Temperatur passend hinterlegten Referenzsignals.

3. Verfahren nach Anspruch 1 oder 2,
wobei die Messabweichung eine Funktion der Temperatur ist, und die zur Temperatur passend hinterlegten Referenzsignale in einer Vergleichstabelle hinterlegt sind.

4. Verfahren nach einem der vorhergehenden Ansprüche,
wobei der erste Szintillator (31) zu dem zweiten Szintillator (32) benachbart ist.

5. Verfahren nach einem der vorhergehenden Ansprüche,
wobei die Messabweichung des ersten Szintillators (31) und/oder des Photodetektors (40) durch eine Alterung des ersten Szintillators (31) und/oder des Photodetektors (40) verursacht wird.

6. Verfahren nach einem der vorhergehenden Ansprüche,
wobei eine Unterscheidung, mittels einer Unterscheidungsvorrichtung (44), des ersten Lichtsignals von dem ersten Szintillator (31) und des zweiten Lichtsignals von dem zweiten Szintillator (32) auf Basis einer unterschiedlichen Laufzeit, einer unterschiedlichen Farbe und/oder einer unterschiedlichen Intensität der Lichtsignale durchgeführt wird.

7. Verfahren nach einem der vorhergehenden Ansprüche,
wobei der zweite Szintillator (32) einer der folgenden Szintillatoren ist:
Lutetium Aluminium Garnet, LuAG, Cerium-dotiertes Lutetium Yttrium Silikat, LYSO, Lutetiumoxyorthosilikat, LSO, Yttrium Aluminium Perovskite (Cerium), YAP, Yttrium-Aluminium-Granat, YAG, und/oder ein ähnlicher Szintillator.

8. Verfahren nach einem der vorhergehenden Ansprüche, mit dem weiteren Schritt:
- Senden eines Alarms, wenn weder das erste Lichtsignal von dem ersten Szintillator (31) noch das zweite Lichtsignal von dem zweiten Szintillator (32) gesendet und/oder empfangen wird.

9. Radiometrische Füllstandmessvorrichtung (10) zur Füllstandmessung, zur Dichtemessung und/oder zur Massenstrommessung, die Füllstandmessvorrichtung (10) aufweisend:
einen ersten Szintillator (31), welcher dazu eingerichtet ist, radioaktive Strahlung von einem Gammastrahler (20) zu detektieren und, in Reaktion auf die radioaktive Strahlung, ein erstes Lichtsignal zu senden;
einen zweiten Szintillator (32), welcher dazu eingerichtet ist, radioaktive Strahlung von dem zweiten Szintillator (32) zu detektieren und, in Reaktion auf die radioaktive Strahlung, ein zweites Lichtsignal zu senden, wobei sich das zweite Lichtsignal von dem ersten Lichtsignal unterscheidet,
wobei der zweite Szintillator (32) von dem ersten Szintillator (31), von einem Gammastrahler (20) und/oder einer weiteren äußeren Strahlenquelle abgeschirmt ist, so dass der zweite Szintillator nur radioaktive Strahlung von dem zweiten Szintillator selbst empfängt;
einen Photodetektor (40), welcher dazu eingerichtet ist, das erste Lichtsignal und das zweite Lichtsignal zu empfangen und in elektrische Signale umzuwandeln; und
einen Komparator (47), welcher dazu eingerichtet ist, die elektrischen Signale mit hinterlegten elektrischen Referenzsignalen zu vergleichen,
wobei die Verstärkung des Photodetektors (40) in Reaktion auf das Vergleichen angepasst wird.

10. Radiometrische Füllstandmessvorrichtung (10) nach Anspruch 9, weiterhin aufweisend eine Unterscheidungsvorrichtung (44), welche dazu eingerichtet ist, das erste Lichtsignal und das zweite Lichtsignal auf Basis einer unterschiedlichen Signallaufzeit, einer unterschiedlichen Farbe und/oder Intensität des ersten Lichtsignals und des zweiten Lichtsignals zu unterscheiden.

11. Radiometrische Füllstandmessvorrichtung (10) nach Anspruch 9 oder 10 wobei der zweite Szintillator (32) einer der folgenden Szintillatoren ist: Lutetium Aluminium Garnet, LuAG, Cerium-dotiertes Lutetium Yttrium Silikat, LYSO, Lutetiumoxyorthosilikat, LSO, Yttrium Aluminium Perovskite (Cerium), YAP, Yttrium-Aluminium-Granat, YAG, und/oder ein ähnlicher Szintillator.

12. Verwendung einer radiometrischen Füllstandmessvorrichtung (10) nach einem der Ansprüche 9 bis 11 oder eines Verfahrens nach einem der Ansprüche 1 bis 8 zur radiometrischen Füllstandmessung, zur Grenzstandmessung, zur Durchflussmessung, zur Massenstrommessung und/oder zur Dichtemessung.

13. Programmelement, welches, wenn es auf einer Prozessoreinheit (48) ausgeführt wird, die Prozessoreinheit (48) anweist, ein Verfahren nach einem der Ansprüche 1 bis 8 durchzuführen.

14. Computerlesbares Medium, auf dem ein Programmelement nach Anspruch 13 gespeichert ist.

## Claims

1. A method for compensating a measurement deviation of a first scintillator (31) and/or of a photodetector (40) of a radiometric fill level measurement device (10) for fill level measurement, comprising the steps of:
- detecting, by means of the first scintillator (31), radioactive radiation from a gamma emitter;
- detecting, by means of a second scintillator (32), radioactive radiation from the second scintillator (32),
wherein the second scintillator (32) is shielded from the first scintillator (31), from the gamma emitter (20), and/or from another external radiation source, so that the second scintillator receives only radioactive radiation from the second scintillator itself;
- sending, in response to radioactive radiation, a first light signal from the first scintillator (31) and a second light signal from the second scintillator (32), the first light signal being different from the second light signal;
- receiving, by means of the photodetector (40), the first light signal from the first scintillator (31) and the second light signal from the second scintillator (32), and converting the light signals into electrical signals;
- comparing, by means of a comparator (47), the electrical signals with stored reference signals; and
- adjusting a gain of the photodetector (40) in response to comparing the electrical signals and stored reference signals.

2. The method of claim 1, comprising the further step of:
- Determination of a current temperature and of the stored reference signal that matches the temperature.

3. The method of claim 1 or 2,
wherein the measurement deviation is a function of the temperature, and the reference signals that match the temperature are stored in a comparison table.

4. The method of any one of the preceding claims,
wherein the first scintillator (31) is adjacent to the second scintillator (32).

5. The method of any one of the preceding claims,
wherein the measurement error of the first scintillator (31) and/or the photodetector (40) is caused by an aging of the first scintillator (31) and/or of the photodetector (40).

6. The method of any one of the preceding claims,
wherein a discrimination, by means of a discriminating device (44), of the first light signal from the first scintillator (31) and the second light signal from the second scintillator (32) is performed based on a different propagation time, a different colour and/or a different intensity of the light signals.

7. The method of any one of the preceding claims,
wherein the second scintillator (32) is one of the following scintillators:
lutetium aluminum Garnet, LuAG, cerium-doped lutetium yttrium silicate, LYSO, lutetium oxyorthosilicate, LSO, yttrium aluminum perovskite (cerium), YAP, yttrium aluminum garnet, YAG, and/or a similar scintillator.

8. The method of any one of the preceding claims, comprising the further step of:
- Sending an alarm when neither the first light signal from the first scintillator (31) nor the second light signal from the second scintillator (32) is sent and/or received.

9. A radiometric fill level measuring device (10) for fill level measurement, for density measurement and/or for mass flow measurement, the fill level measuring device (10) comprising:
a first scintillator (31) configured to detect radioactive radiation from a gamma emitter (20) and, in response to the radioactive radiation, to send a first light signal;
a second scintillator (32) configured to detect radioactive radiation from the second scintillator (32) and, in response to the radioactive radiation, to send a second light signal, the second light signal being different from the first light signal,
wherein the second scintillator (32) is shielded from the first scintillator (31), from a gamma emitter (20) and/or from another external radiation source, so that the second scintillator receives only radioactive radiation from the second scintillator itself;
a photodetector (40) configured to receive the first light signal and the second light signal and to convert them into electrical signals; and
a comparator (47) which is configured to compare the electrical signals with stored electrical reference signals,
wherein the gain of the photodetector (40) is adjusted in response to the comparing.

10. The radiometric fill level measurement device (10) of claim 9, further comprising:
a discriminating device (44) configured to discriminate the first light signal and the second light signal based on a different signal propagation time, a different colour and/or intensity of the first light signal and the second light signal.

11. The radiometric fill level measuring device (10) of claim 9 or 10,
wherein the second scintillator (32) is one of the following scintillators:
lutetium aluminum garnet, LuAG, cerium-doped lutetium yttrium silicate, LYSO, lutetium oxyorthosilicate, LSO, yttrium aluminum perovskite (cerium), YAP, yttrium aluminum garnet, YAG, and/or a similar scintillator.

12. Use of a radiometric fill level measurement device (10) according to any one of claims 9 to 11 or of a method according to any one of claims 1 to 8 for radiometric fill level measurement, for limit level measurement, for flow measurement, for mass flow measurement and/or for density measurement.

13. A program element that, when executed on a processing unit (48), instructs the processing unit (48) to perform a method according to any one of claims 1 to 8.

14. A computer-readable medium on which a program element according to claim 13 is stored.

## Revendications

1. Procédé pour compenser un écart de mesure d'un premier scintillateur (31) et/ou d'un photodétecteur (40) d'un dispositif de mesure de niveau de remplissage radiométrique (10) destiné à mesurer un niveau de remplissage, comportant les étapes consistant à :
- détecter, au moyen du premier scintillateur (31), un rayonnement radioactif d'un émetteur gamma (20),
- détecter, au moyen d'un second scintillateur (32), un rayonnement radioactif du second scintillateur (32),
dans lequel le second scintillateur (32) est protégé du premier scintillateur (31), de l'émetteur gamma (20) et/ou d'une source de rayonnement extérieure supplémentaire, de sorte que le second scintillateur reçoit uniquement le rayonnement radioactif du second scintillateur ;
- émettre, en réponse au rayonnement radioactif, un premier signal lumineux à partir du premier scintillateur (31) et un second signal lumineux à partir du second scintillateur (32), le signal lumineux étant différent du second signal lumineux ;
- recevoir, au moyen du photodétecteur (40), le premier signal lumineux provenant du premier scintillateur (31) et le second signal lumineux provenant du second scintillateur (32), et convertir les signaux lumineux en signaux électriques ;
- comparer, au moyen d'un comparateur (47), les signaux électriques avec des signaux de référence stockés ; et
- ajuster un gain du photodétecteur (40) en réponse à la comparaison des signaux électriques et des signaux de référence stockés.

2. Procédé selon la revendication 1, comportant l'étape supplémentaire consistant à :
- déterminer une température actuelle et le signal de référence stocké de manière adaptée à la température.

3. Procédé selon la revendication 1 ou 2,
dans lequel l'écart de mesure est fonction de la température et les signaux de référence stockés de manière adaptée à la température sont stockés dans un tableau comparatif.

4. Procédé selon l'une des revendications précédentes,
dans lequel le premier scintillateur (31) est adjacent au second scintillateur (32).

5. Procédé selon l'une des revendications précédentes,
dans lequel l'écart de mesure du premier scintillateur (31) et/ou du photodétecteur (40) est dû à un vieillissement du premier scintillateur (31) et/ou du photodétecteur (40).

6. Procédé selon l'une des revendications précédentes,
dans lequel une discrimination, au moyen d'un dispositif de discrimination (44), du premier signal lumineux provenant du premier scintillateur (31) et du second signal lumineux provenant du second scintillateur (32) est réalisée sur la base d'un temps de propagation différent, d'une couleur différente et/ou d'une intensité différente des signaux lumineux.

7. Procédé selon l'une des revendications précédentes,
dans lequel le second scintillateur (32) est l'un des scintillateurs suivants :
grenat de lutécium-aluminium, LuAG, silicate de lutécium et d'yttrium dopé au cérium, LYSO, oxy-orthosilicate de lutécium, LSO, pérovskite d'yttrium et d'aluminium (cérium), YAP, grenat d'yttrium-aluminium, YAG, et/ou un scintillateur analogue.

8. Procédé selon l'une des revendications précédentes, comportant les étapes supplémentaires consistant à :
- émettre une alarme lorsque ni le premier signal lumineux du premier scintillateur (31) ni le second signal lumineux du second scintillateur (32) n'est émis et/ou reçu.

9. Dispositif de mesure de niveau de remplissage radiométrique (10) destiné à mesurer un niveau de remplissage, une densité et/ou un débit massique, le dispositif de mesure de niveau de remplissage (10) comportant :
un premier scintillateur (31) configuré pour détecter un rayonnement radioactif d'un émetteur gamma (20) et émettre un premier signal lumineux en réponse au rayonnement radioactif ;
un second scintillateur (32) configuré pour détecter un rayonnement radioactif du second scintillateur (32) et émettre un second signal lumineux en réponse au rayonnement radioactif, le second signal lumineux étant différent du premier signal lumineux,
dans lequel le second scintillateur (32) est protégé du premier scintillateur (31), d'un émetteur gamma (20) et/ou d'une source de rayonnement extérieure supplémentaire, de sorte que le second scintillateur reçoit uniquement le rayonnement radioactif du second scintillateur ;
un photodétecteur (40) configuré pour recevoir le premier signal lumineux et le second signal lumineux et les convertir en signaux électriques ; et
un comparateur (47) configuré pour comparer les signaux électriques avec des signaux de référence électriques stockés,
dans lequel le gain du photodétecteur (40) est ajusté en réponse à la comparaison.

10. Dispositif de mesure de niveau de remplissage radiométrique (10) selon la revendication 9, comportant en outre un dispositif de discrimination (44) configuré pour discriminer le premier signal lumineux et le second signal lumineux sur la base d'un temps de propagation de signal différent, d'une couleur différente et/ou d'une intensité du premier signal lumineux et du second signal lumineux.

11. Dispositif de mesure de niveau de remplissage radiométrique (10) selon la revendication 9 ou 10,
dans lequel le second scintillateur (32) est l'un des scintillateurs suivants :
grenat de lutécium-aluminium, LuAG, silicate de lutécium et d'yttrium dopé au cérium, LYSO, oxy-orthosilicate de lutécium, LSO, pérovskite d'yttrium et d'aluminium (cérium), YAP, grenat d'yttrium-aluminium, YAG, et/ou un scintillateur analogue.

12. Utilisation d'un dispositif de mesure de niveau de remplissage radiométrique (10) selon l'une des revendications 9 à 11 ou d'un procédé selon l'une des revendications 1 à 8 pour la mesure d'un niveau de remplissage radiométrique, d'un niveau de seuil, d'un débit, d'un débit massique et/ou d'une densité.

13. Élément de programme qui, lorsqu'il est exécuté sur une unité de processeur (48), ordonne à l'unité de processeur (48) de mettre en œuvre un procédé selon l'une des revendications 1 à 8.

14. Support lisible par ordinateur sur lequel est mémorisé un élément de programme selon la revendication 13.
